# EUROPEAN PATENT APPLICATION

(11) **EP 0 620 977 A1**
(43) Date of publication of application: **26.10.1994**
(21) Application number: 94100942.5
(22) Date of filing: 24.01.1994
(51) Int. Cl.: A23C 3/03, A23L 2/20

(54) **Process and apparatus for the heat treatment of liquid food products, particularly for heating milk in the making of dairy products**

(30) Priority: 25.01.1993 IT MO930005; 04.11.1993 IT MI932351
(71) Applicant: INVENTA S.r.L., I-35123 Padova (IT)
(72) Inventor: Muzzarelli, Gabriele, I-41100 Modena (IT); Manzolli, Giuseppe Imo, I-35123 Padova (IT)
(74) Representative: Modiano, Guido, Dr.-Ing.

(57) **Abstract**

Process and apparatus for the heat treatment of liquid food products, particularly for heating milk in the making of dairy products. The process consists in immersing a heat exchanger in the liquid to be treated, which is contained in a vessel, and in moving the liquid to be treated over the heat-exchange surface of the heat exchanger.

## Description

The present invention relates to a process and an apparatus for the heat treatment of liquid food products, particularly for heating milk in the making of dairy products.

In the dairy-product industry, the conversion of the initial product, constituted by milk, generally entails heat treatment with heating operations that for some particular processes must occur in very short times.

A typical example of this requirement is the process for producing cheese made from heated curd, such as for example the cheese known as "Grana Padano" or the one known as "Parmigiano-Reggiano", in which the milk is coagulated by means of heat-exchange coagulation devices. These devices are constituted by a conical copper vessel provided with a jacket in which high-temperature steam is circulated. With these coagulation devices it is possible to perform an effective heat exchange which ensures that the milk passes from a temperature of approximately 34^{o}C to approximately 56^{o}C, i.e. with a temperature increase of 22^{o}C, within 8 to 9 minutes, which is the so-called "cooking time" for producing the above mentioned cheese types.

Conventional conical coagulation vessels have a capacity of approximately 1200 liters with a heat-exchange surface of approximately 4.5 square meters. This is, in practice, the maximum size for an exchanger of this type, since any further increase would cause an excessive increase in the volume of the liquid to be treated with respect to the heat-exchange surface and would thus slow down the heating of the milk, making it impossible to comply with the "cooking time" required for the typical production of these cheeses.

This fact is a very severe limitation to production and significantly affects the production costs of these kinds of cheese.

Other dairy processes also require milk heating, which is in any case performed in vessels having walls with a jacket in which the heating fluid circulates, with the above described limitations in quantity and/or speed.

A principal aim of the present invention is to solve the problems described above by providing a process and apparatus for the heat treatment of liquid food products, particularly for heating milk in the making of dairy products, which allows to treat, within the required time, considerably larger masses of liquid food product than those that can be treated with currently commercially available processes and equipment.

An object of the invention is to provide a process and an apparatus which are highly versatile in use so as to allow to vary, according to the requirements, both the amount of liquid to be treated and the treatment time, as well as the temperature change required to perform a particular process.

Another object of the invention is to provide an apparatus which is structurally simple and highly reliable in operation.

Another object of the invention is to provide an apparatus which is simple to clean, so as to offer the greatest assurances of hygiene, avoiding contaminations of the liquid to be treated.

With this aim in view, as well as these and other objects which will become apparent hereinafter, there is provided, according to the present invention, a process for the heat treatment of liquid food products, particularly for heating milk in the making of dairy products, characterized in that it consists in immersing a heat exchanger in the liquid to be treated, which is contained in a vessel, and in moving said liquid over the heat-exchange surface of said heat exchanger.

The invention furthermore provides an apparatus which is characterized in that it comprises a vessel for the liquid to be treated and a heat exchanger which can be immersed in the liquid to be treated, which is contained in said vessel, means being provided for moving the liquid to be treated over the heat-exchange surface of the heat exchanger.

Further characteristics and advantages of the process according to the present invention will become apparent from the following detailed description of a preferred but not exclusive embodiment thereof, as well as of two preferred but not exclusive embodiments of the apparatus according to the invention, illustrated only by way of non-limitative example in the accompanying drawings, wherein:
figure 1 is a schematic and partially cutout lateral elevation view of the apparatus according to the invention in its first embodiment;
figure 2 is a schematic axially sectional view of the heat exchanger of the apparatus shown in figure 1;
figure 3 is a sectional view of figure 2, taken along the plane III-III;
figure 4 is a schematic exploded and partially sectional view of the apparatus according to the invention in a second embodiment;
figure 5 is a perspective view of the heat exchanger of the apparatus shown in figure 4;
figure 6 is a schematic view of the arrangement of the tubes in the tube bundle that forms the heat exchanger shown in figures 4 and 5;
figure 7 is a perspective view of an apparatus according to the present invention that uses three heat exchangers of the type shown in figure 5.

With reference to the above figures, the apparatus for performing the process according to the present invention comprises a heat exchanger, generally designated by the reference numerals 1 and 101 respectively in the two illustrated embodiments, which is meant to be immersed in the liquid 20 to be treated, said liquid being placed beforehand in a treatment vessel or vat 21, 102.

In the first embodiment, the exchanger 1 comprises a bundle 2 of vertical and mutually parallel tubes 3 inside which a heat-transferring fluid, preferably constituted by steam at a temperature which is preset according to the heating requirements of the liquid 20 to be treated, is circulated in a known manner.

The apparatus according to the invention furthermore comprises means for moving the liquid 20 to be treated over the heat-exchange surface of the heat exchanger 1, which is constituted by the surface of the tubes 3. Said movement means are preferably constituted by an ejection turbine 5 located in the cavity formed by the tubes 3, which are arranged so that their axes lie on two concentric cylindrical surfaces. The turbine 5 is driven by a motor 13 and has radially-extending vanes 5a so as to produce a radial flow that conveys the liquid to be treated onto the tubes 3 of the heat exchanger. The rotation rate of the turbine 5 and the shape of its vanes are designed so that the motion of the liquid 20 to be treated over the heat-exchange surface of the heat exchanger is a turbulent motion to ensure effective heat exchange between the heat-transferring fluid flowing in the tubes 3 and the liquid 20 to be treated.

Each one of the tubes 3 is substantially U-shaped, and its inlet and outlet ends are joined to an upper manifold 6 having a box-like shape with a circular plan; the inside of said manifold is divided by partitions 7 which separate clusters of upper ends of said tubes 3 which are connected to said upper manifold.

Each one of the tubes 3 lies on a vertical plane P defined by the axes of the descending portion 3a and of the ascending portion 3b of the related tube 3; said plane P forms a preset angle α with respect to the corresponding vertical radial plane R of the ideal cylindrical surfaces along which the axes of the portions 3a and 3b of the tubes 3 are arranged.

The distances "d/2" between the portions of the tubes are constant and are preferably equal to half of their diameter "d", forming a sort of grid; the fluid must follow a convoluted path in order to pass through said grid.

Ducts 8 and 9, respectively for the intake and discharge of the heat-transferring fluid, are provided in said box-like manifold 6 on the face 6a that lies opposite to the face where the tubes 3 join.

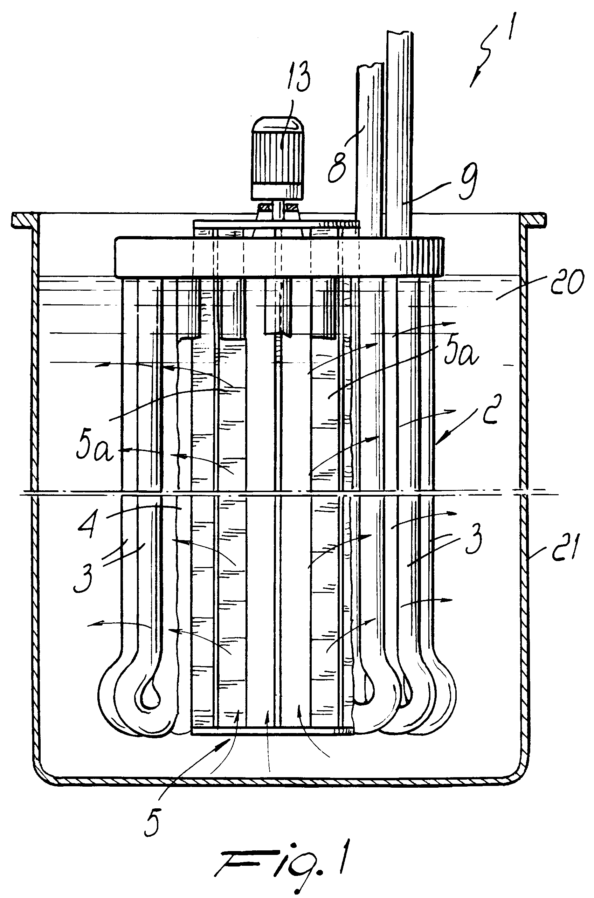

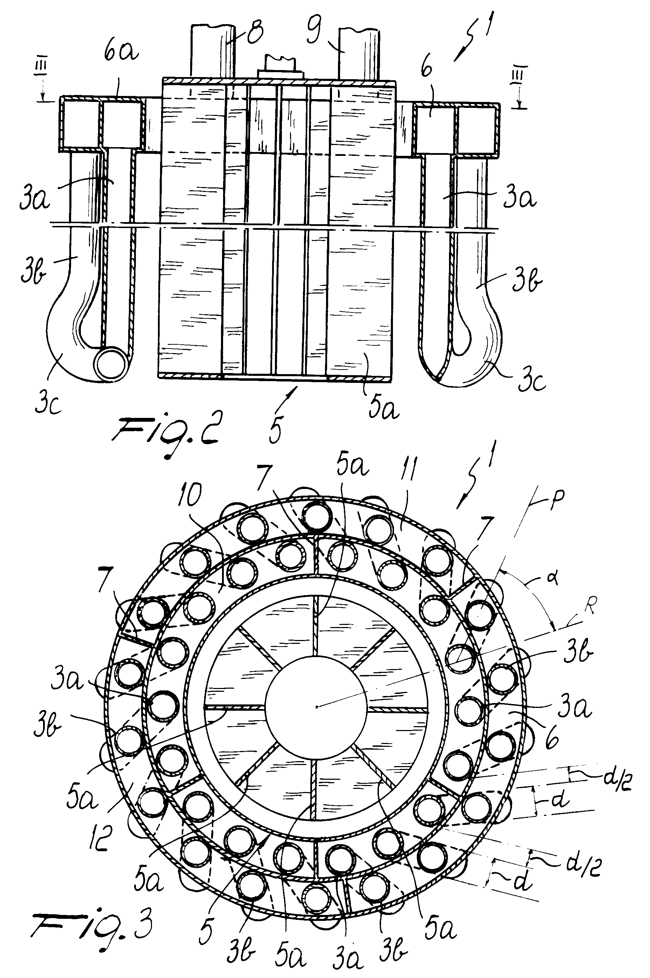

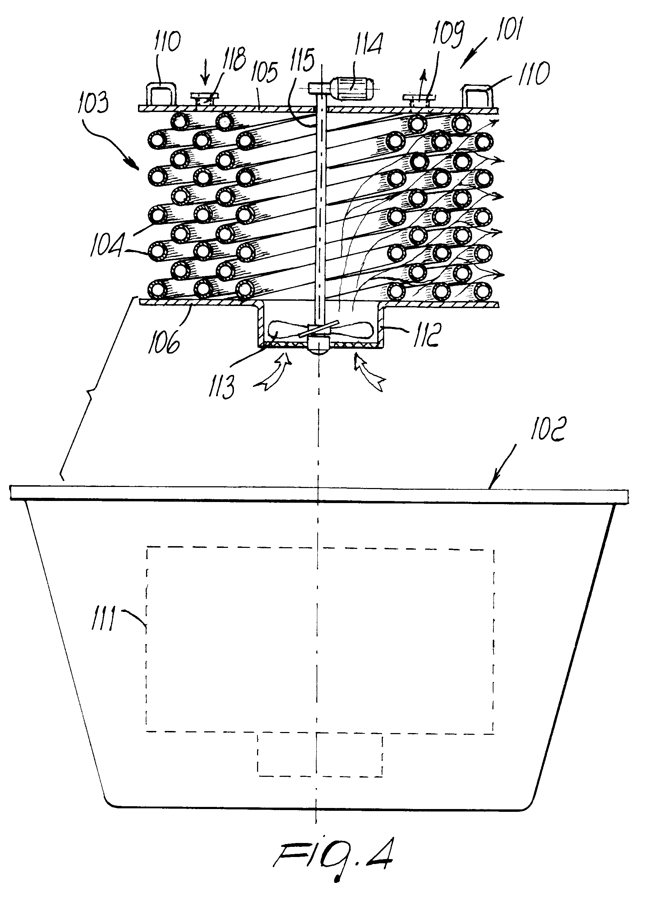

The inside of the box-like manifold 6 is divided by the partitions 7 into sections which, in a plan view, since there are at least two concentric sets, are arranged so that they are offset in a circumferential direction, so that each one of said sections acts as connection for the sections adjacent thereto. Therefore, for example, in figure 3 the reference numeral 10 designates the section that joins the sections 11 and 12. The two end sections are connected to the ducts 8 and 9 respectively.

The lower end of the descending tube 3a is joined to the lower end of the ascending tube 3b through a rounded elbow 3c which protrudes slightly outward and inside which any deposit of condensate, however small, accumulates; in any case, said condensate is systematically removed and transferred outward by the current of the heat-transferring fluid itself.

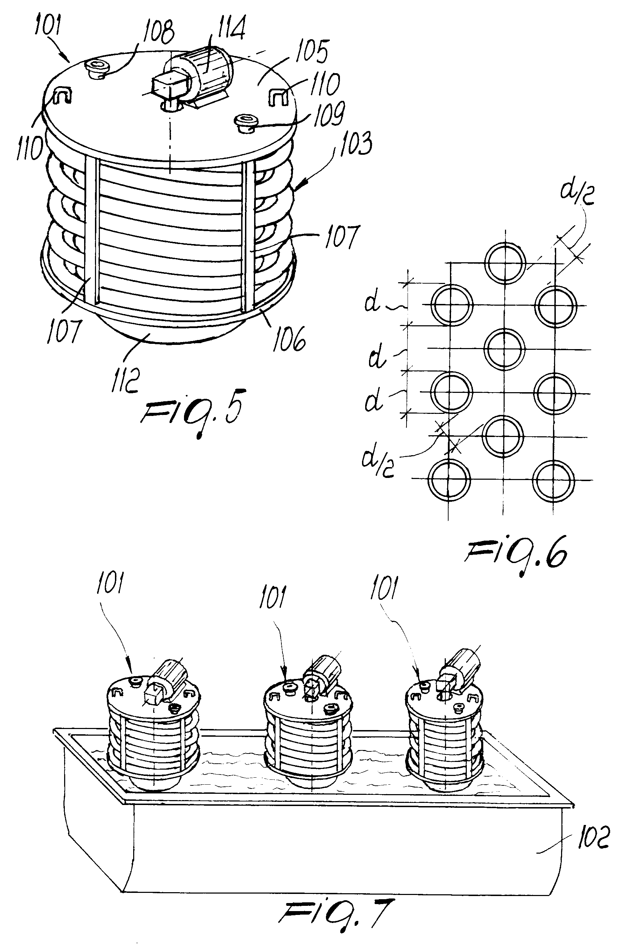

The heat exchanger 101 of the apparatus in its second embodiment, illustrated in figures 4 to 7, is substantially composed of a tube bundle 103 which is constituted by a plurality of coils 4, preferably made of copper, which wind in an orderly manner in a spiral shape around the same axis 125, which is vertical when the heat exchanger 101 is in its operating position. The tube bundle 103 is fixed to a pair of plates 105 and 106 which are peripherally connected to each other by tie rods 107.

Conveniently, the coils 4 are arranged so that they are mutually equidistant in order to form, in a sectional plane which is radial with respect to the axis 125, a sort of uniform grid. It has been observed that best efficiency is achieved by making the pitch between the coils 104 equal to their diameter "d" and by making the diagonal distance between said coils equal to half of said diameter "d" (figure 6).

The plate 105, hereinafter termed upper plate, has manifolds 108 and 109 respectively for the intake and the discharge of the heat-transferring fluid, preferably steam, which is fed in the coils 104 of the tube bundle 103.

The upper plate 105 furthermore has couplings 110, located in mutually diametrically opposite positions, for coupling to an appropriate lifting element, not shown, which inserts the device into the vessel 102, containing the liquid to be treated, and removes it from said vessel.

In figure 4, the dashed line indicates the position assumed by the exchanger 101 inside the vessel 102.

An opening 112 is formed in the lower plate 106 and is suitable to let the liquid to be treated flow through the exchanger 101. The inlet 112 has substantially the same diametrical dimensions as the compartment formed axially by the tube bundle 103.

The means for moving the liquid to be treated comprise an impeller 113 which is accommodated at the inlet 112 and is rotated by a motor 114, supported by the upper plate 105, by means of a transmission shaft 115 which is arranged coaxially to the tube bundle 103. Actuation of the impeller 113 draws the liquid to be treated from the bottom of the vessel 102 through the inlet 112 and produces a flow that strikes, with a preferably turbulent motion, the coils 104 of the tube bundle 103 in which the heat-transferring fluid for heating the tube bundle 103 flows.

Operation of the apparatus 1, 101 in the execution of the process according to the invention is as follows.

In order to perform the heat treatment of a liquid food product, the liquid 20 to be treated is placed inside the vessel or treatment vat 21, 102 and the heat exchanger 1, 101 is immersed in the treatment liquid. While the heat exchanger 1, 101 is supplied with the heat-transferring fluid, the turbine 5 or impeller 113 is actuated, thus moving the liquid to be treated against the heat-exchange surface of the heat exchanger 1, 101. The actuation of the turbine 5 or impeller 113 in practice causes the cyclic flow of the liquid to be treated over the heat-exchange surface of the heat exchanger 1, 101 with a turbulent motion that ensures effective heat exchange between the heat-transferring fluid circulating inside the heat exchanger 1, 101 and the liquid 20 to be treated.

In practice, the process and the apparatus for performing it, according to the invention, differently from the conventional art, in which the liquid to be treated is heated by heating the walls of the vessel in which the liquid is contained and which is therefore heavily affected by the dimensions of the vessel, subjects the liquid placed in the vessel 21, 102 to heat treatment directly from the inside of the liquid to be treated. In this manner, since the heat-exchange surface is fully independent of the dimensions of the vessel containing the liquid to be treated, it is possible to perform heat treatments, i.e. heating processes but also cooling processes, at the rates and with the temperature changes required by a given production. Thus, for example, it is possible to cook, by heating, large masses of curd in its whey within the "cooking time" and at the temperatures required to produce Grana Padano or Parmigiano Reggiano without limitations as far as the amount of milk to be treated is concerned. It should be noted that the apparatus for performing the process according to the invention may also have multiple heat exchangers to be immersed in a same treatment vat according to the amount of liquid to be treated, as shown in figure 7.

In practice it has been observed that the process and the apparatus for performing it, according to the present invention, fully achieve the intended aim, since they allow to perform the heat treatment of liquid food products regardless of the size of the vessel in which the treatment is performed and thus independently of the amount of liquid to be treated.

Although the process and the apparatus according to the invention have been conceived particularly to perform the heating process for coagulating milk in the making of heated-curd cheese, it may nonetheless be used advantageously to heat milk in the making of other kinds of cheese too, as well as for any heat treatment required in the making of dairy products in general. The process according to the invention may furthermore be used to heat or cool in a preset time not just milk, but other liquid food products as well, such as for example for the heat treatment of musts during fermentation in winemaking, or in other fields.

The process and the apparatus for performing it thus conceived are susceptible to numerous modifications and variations, all of which are within the scope of the inventive concept; thus, for example, the number of sets of tubes 3 may be increased according to the required heat-exchange surface.

All the details may furthermore be replaced with other technically equivalent elements.

In practice, the materials employed, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Process for the heat treatment of liquid food products, particularly for heating milk in the making of dairy products, characterized in that it comprises immersing a heat exchanger in the liquid to be treated, which is contained in a vessel, and moving said liquid over the heat-exchange surface of said heat exchanger.

2. Process according to claim 1, characterized in that said liquid is moved over the heat-exchange surface of said heat exchanger with a turbulent motion.

3. Process according to claim 1, characterized in that said heat exchanger has a plurality of tubes in which a heat-transferring fluid circulates.

4. Process according to claim 3, characterized in that said heat-transferring fluid is constituted by steam.

5. Apparatus for the heat treatment of liquid food products, particularly for heating milk in the making of dairy products, characterized in that it comprises a vessel for the liquid to be treated and at least one heat exchanger which can be immersed in the liquid to be treated that is present in said vessel, means being provided for moving the liquid to be treated over the heat-exchange surface of said heat exchanger.

6. Apparatus according to claim 5, characterized in that said heat exchanger is constituted by a bundle of vertical and mutually parallel tubes arranged so as to form at least one ideal cylindrical surface, said movement means comprising a turbine for the turbulent radial ejection of the liquid to be treated, said turbine being arranged inside said ideal cylindrical surface.

7. Apparatus according to claim 6, characterized in that each one of said tubes is substantially U-shaped so that its inlet and outlet ends merge in an upper box-like manifold having a circular plan shape, the inside of said manifold being divided by partitions for the guided routing of the heat-transferring fluid.

8. Apparatus according to claim 7, characterized in that the ascending and descending portions of a same one of said tubes lie in a vertical plane forming a preset angle α with respect to a radial plane of said ideal cylindrical surface.

9. Apparatus according to claim 8, characterized in that the distances between the portions of said tubes are constant and are equal to half the diameter of said tubes.

10. Apparatus according to claim 7, characterized in that ducts for the intake and discharge of the heat-transferring fluid are provided in said box-like manifold on the face opposite to the face where said tubes join.

11. Apparatus according to claim 8, characterized in that the ascending and the descending portions of each one of said tubes are mutually joined by a rounded elbow protruding outwardly.

12. Apparatus according to claim 6, characterized in that said tube bundle is composed of one or more concentric sets of tubes.

13. Apparatus according to claim 5, characterized in that said exchanger comprises a tube bundle constituted by a plurality of coils which wind in an orderly manner in a spiral shape around an axis which is vertical in operating position and are associated with a pair of plates, respectively an upper plate and a lower plate, said upper plate having manifolds for the intake and discharge of the heat-transferring fluid for heating said coils of the tube bundle, the inlet for the liquid to be treated, pushed by said movement means through said tube bundle, being formed in the lower plate.

14. Apparatus according to claim 13, characterized in that said movement means comprise an impeller which is arranged proximate to said inlet and can be activated by control to draw the liquid to be treated from said vessel through said inlet and to produce a flow of the liquid to be treated that strikes said coils of the tube bundle.

15. Apparatus according to claim 14, characterized in that said impeller is driven by a motor which is supported by said upper plate by means of a transmission shaft arranged coaxially to said tube bundle.

16. Apparatus according to claim 13, characterized in that the diametrical dimensions of said inlet are substantially equal to those of the compartment formed axially in said tube bundle.

17. Apparatus according to claim 13, characterized in that said coils are mutually equidistant so as to form, in a sectional plane which is radial with respect to the axis of said tube bundle, a sort of uniform grid in which the pitch between said coils is equal to their diameter and the diagonal distance between said coils is equal to half of said diameter.
